# EUROPÄISCHE PATENTSCHRIFT

(11) **EP 2 111 501 B1**
(45) Veröffentlichungstag und Bekanntmachung des Hinweises auf die Patenterteilung: **11.04.2012**
(21) Anmeldenummer: 08701603.6
(22) Anmeldetag: 21.01.2008
(51) Int. Cl.: F02B 29/08, F02D 9/16

(54) **BRENNKRAFTMASCHINE**
INTERNAL COMBUSTION ENGINE
MOTEUR À COMBUSTION INTERNE

(30) Priorität: 23.01.2007 DE 102007004264
(43) Veröffentlichungstag der Anmeldung: 28.10.2009
(73) Patentinhaber: MAHLE International GmbH, 70376 Stuttgart (DE)
(72) Erfinder: ELSÄSSER, Alfred, 75210 Keltern (DE); LOCH, Adam, 70378 Stuttgart (DE)
(74) Vertreter: BRP Renaud & Partner
(86) Internationale Anmeldenummer: PCT/EP2008/050638
(87) Internationale Veröffentlichungsnummer: WO 2008/090123

(56) Entgegenhaltungen:
- DE-A1- 10 240 913
- DE-A1- 19 830 575
- JP-A- 61 200 324
- ELSAESSER A ET AL: "IMPULSAUFLADUNG UND LASTSTEUERUNG VON HUBKOLBENMOTOREN DURCH EIN LUFTTAKTVENTIL" MTZ MOTORTECHNISCHE ZEITSCHRIFT, VIEWEG VERLAG, WIESBADEN, DE, Bd. 62, Nr. 12, 1. Dezember 2001 (2001-12-01), Seiten 998-1009, XP001111809 ISSN: 0024-8525

## Beschreibung

Die vorliegende Erfindung betrifft eine Brennkraftmaschine, insbesondere in einem Fahrzeug, mit den Merkmalen des Oberbegriffs des Anspruchs 1. Die Erfindung betrifft außerdem ein Verfahren zum Kälteladen von Zylindern einer derartigen Brennkraftmaschine sowie ein Frischgasventil für eine solche Brennkraftmaschine.

Aus der DE 102 40 913 A1 ist eine Brennkraftmaschine für ein Fahrzeug bekannt, die mehrere Zylinder aufweist, in denen jeweils ein Brennraum ausgebildet und ein Kolben hubverstellbar angeordnet ist. Je Zylinder sind zumindest ein Einlassventil sowie zumindest eine Frischgasleitung zum Zuführen von Frischgas zum jeweiligen Brennraum vorgesehen. Ferner ist je Zylinder ein Frischgasventil.vorgesehen, das in der jeweiligen Frischgasleitung stromauf des jeweiligen Einlassventils angeordnet ist und mit dem die jeweilige Frischgasleitung steuerbar ist. Für die Betätigung der Frischgasventile ist eine Steuerung vorgesehen, mit der die Frischgasventile zur Realisierung einer Kälteladung der Zylinder ansteuerbar sind. Bei einer derartigen Kälteladung sperrt das jeweilige Frischgasventil die jeweilige Frischgasleitung bevor das jeweilige Einlassventil schließt. Mit Hilfe der zusätzlich zu den Einlassventilen vorgesehenen Frischgasventilen kann somit ein frühes Einlass-Schließen bei den Zylindern realisiert werden, selbst wenn die eigentlichen Einlassventile noch geöffnet sind. Dieses frühe Einlass-Schließen ist an sich als Miller-Verfahren bekannt. Je näher am oberen Totpunkt das jeweilige Frischgasventil geschlossen wird, desto weniger Frischgas strömt in den jeweiligen Zylinder und desto kälter ist das Frischgas wegen seiner Entspannung auf einen niedrigeren Druck bei Verdichtungsbeginn und wegen seiner Kompression auf einen niedrigeren Druck bei Verdichtungsende. Hierdurch lässt sich eine Reduzierung der Schadstoffemissionen erreichen.

Das jeweilige Frischgasventil besitzt eine um eine Drehachse drehverstellbare Klappe. Bei der bekannten Brennkraftmaschine ist das jeweilige Frischgasventil als diskontinuierlich arbeitendes Ventil ausgestaltet, dessen Klappe zur Realisierung von Schaltvorgängen mit einer relativ hohen Schaltgeschwindigkeit zwischen einer Schließstellung, in der die Klappe sich quer zur Strömungsrichtung erstreckt und den durchströmbaren Querschnitt der Frischgasleitung sperrt, und einer Offenstellung hin und her verstellbar ist, in der sich die Klappe parallel zur Strömungsrichtung erstreckt und somit den durchströmbaren Querschnitt der Frischgasleitung maximal freigibt. Charakterisierend für ein derartiges diskontinuierlich arbeitendes Ventil ist, dass sein Ventilglied, also die Klappe, in den beiden Endstellungen, also in der Offenstellung und in der Schließstellung zwischen den einzelnen Schaltvorgängen stillsteht. Um die erforderlichen Schaltzeiten für das jeweilige Frischgasventil, die im Millisekundenbereich liegen können, zu realisieren, sind an einen hierzu erforderlichen Stellantrieb ebenso wie an das Ventilglied relativ hohe Anforderungen hinsichtlich Leistung und Festigkeit zu stellen, wodurch das jeweilige Frischgasventil vergleichsweise teuer ist.

Aus der DE 198 30 575 ist eine gattungsgemäße Brennkraftmaschine bekannt, bei der in einer zu einem Zylinder führenden Frischgasleitung stromauf eines Einlassventils ebenfalls ein Frischgasventil angeordnet ist, dessen Ventilglied als Drehschieber ausgestaltet ist. Dieser Drehschieber besitzt einen Zylinderkörper, der um eine quer zur Strömungsrichtung orientierte Drehachse drehverstellbar gelagert ist und der an zwei Seiten, die sich bezüglich der Drehachse diametral gegenüber liegen, jeweils eine zylindersegmentförmige Aussparung aufweist. Ein derartiges Frischgasventil mit Drehschieber arbeitet kontinuierlich, da der Drehschieber zur Realisierung von Schaltvorgängen permanent mit gleichbleibender Drehrichtung und mit einer durch die gewünschten Schaltzeiten bestimmten Drehgeschwindigkeit verstellt wird. Dabei durchfährt der Drehschieber in der Drehrichtung nacheinander einen Schließwinkelbereich, in dem der durchströmbare Querschnitt der Frischgasleitung abnimmt, einen Sperrwinkelbereich, in dem der durchströmbare Querschnitt der Frischgasleitung gesperrt ist, und einen Öffnungswinkelbereich, in dem der durchströmbare Querschnitt der Frischgasleitung zunimmt. Sofern wie beim bekannten Frischgasventil die Aussparungen im Drehschieber in der Umfangsrichtung einen größeren Winkelbereich aufweisen als eine Einlassöffnung und eine Auslassöffnung, über die das Frischgasventil in die Frischgasleitung eingebunden ist, durchfährt der Drehschieber zwischen dem Öffnungswinkelbereich und dem nächsten Schließwinkelbereich außerdem einen zusätzlichen Winkelbereich, in dem der durchströmbare Querschnitt Frischgasleitung maximal geöffnet ist und konstant bleibt.

Im Vergleich zu einem diskontinuierlich arbeitenden Ventil lässt sich ein derartiges kontinuierlich arbeitendes Ventil im Hinblick auf die erforderlichen kleinen Schaltzeiten preiswerter realisieren. Es hat sich jedoch gezeigt, dass ein Frischgasventil mit einem Drehschieber als Ventilglied relativ große Strömungswiderstände aufweisen kann, was sich bei der Realisierung effektiver Ladungswechselvorgänge nachteilig auswirken kann. Des Weiteren besitzt eine derartiger Drehschieber ein relativ großes Trägheitsmoment, was für dynamische Veränderungen der Drehgeschwindigkeit nachteilig ist.

Die vorliegende Erfindung beschäftigt sich mit dem Problem, für eine Brennkraftmaschine bzw. für ein Verfahren bzw. für ein Frischgasventil der eingangs genannten Art eine verbesserte Ausführungsform anzugeben, die sich insbesondere durch eine preiswerte Realisierbarkeit und/oder durch einen verbesserten Ladungswechsel und/oder durch eine verbesserte Adaption an sich ändernde Betriebszustände der Brennkraftmaschine auszeichnen soll.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das mit einer Klappe als Ventilglied versehene Frischgasventil als kontinuierlich arbeitendes Ventil auszugestalten. Durch diese Bauweise lässt sich ein vergleichsweise preiswerter Aufbau für das Frischgasventil realisieren, wobei gleichzeitig günstige Strömungsverhältnisse mit niedrigen Strömungswiderständen realisierbar sind, was die Ladungswechselvorgänge begünstigt.

Außerdem ist bei der Erfindung zwischen einer der Klappe zugewandten Innenseite eines Wandabschnitts, der zum Beispiel zur jeweiligen Frischgasleitung oder zu einem Ventilgehäuse gehört und mit dem die Klappe zur Ausbildung des Sperrwinkelbereichs zusammenwirkt, und einer bezüglich der Drehachse radial außen liegenden Klappenkante im Sperrwinkelbereich ein Drosseldichtspalt ausgebildet. Durch die Ausbildung eines derartigen Drosseldichtspalts wird die Erzielung einer hinreichenden Dichtwirkung ohne direkte Kontaktierung zwischen der Klappenkante und der Innenseite erreicht. Die Dichtung wird mit Hilfe der Drosselwirkung erreicht, die durch das Spaltmaß, also insbesondere durch die in radialer Richtung gemessene Spaltweite, bestimmt ist. Die mit Hilfe eines derartigen Drosseldichtspalts realisierte Dichtung ist quasi verschleißfrei und reduziert die Bauteilbelastung, wodurch das Frischgasventil preiswerter realisierbar ist.

Des Weiteren ist bei der Erfindung die mit der Klappenkante im Sperrwinkelbereich den Drosseldichtspalt ausbildende Innenseite an einem Wandbauteil ausgebildet, das bezüglich einer die Klappe im Sperrwinkelbereich umschließenden Wand ein separates Bauteil bildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, prinzipielle Schnittdarstellung einer Brennkraftmaschine im Bereich eines Frischgasventils,
- Fig. 2: einen vereinfachten Längsschnitt durch das Frischgasventil,
- Fig. 3: einen Querschnitt des Frischgasventils,
- Fig. 4: ein vergrößertes Detail IV aus Fig. 3 und
- Fig. 5: einen Querschnitt wie in Fig. 3, jedoch bei einer anderen Ausführungsform des Frischgasventils.

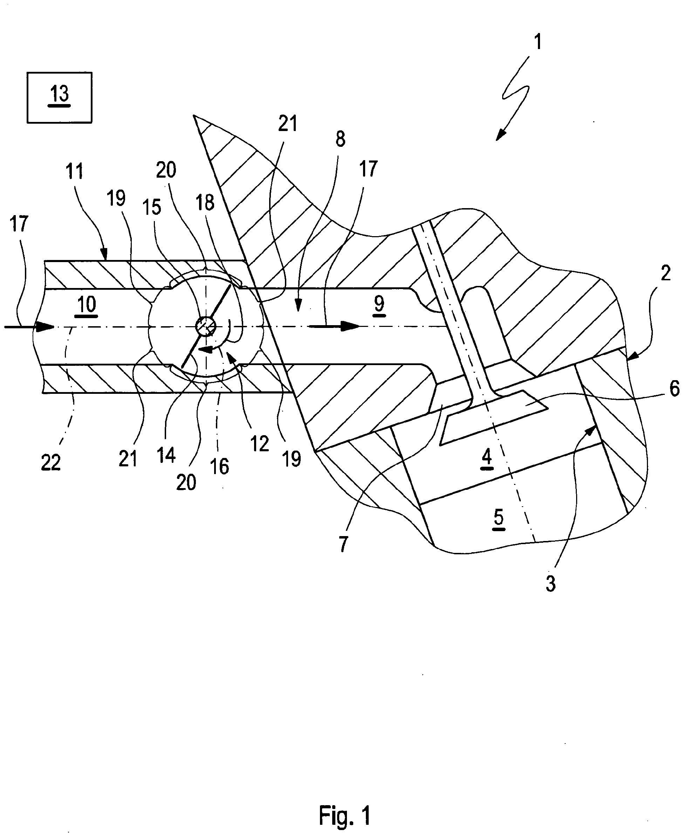

Entsprechend Fig. 1 umfasst eine nur teilweise dargestellte Brennkraftmaschine 1 in einem Motorblock 2 mehrere Zylinder 3, wobei in Fig. 1 jedoch nur ein Zylinder 3 erkennbar ist. Jeder Zylinder 3 enthält einen Brennraum 4. In jedem Zylinder 3 ist ein nur teilweise dargestellter Kolben 5 in bekannte Weise hubverstellbar angeordnet. Je Zylinder 3 ist üblicherweise mindestens ein Einlassventil 6 vorgesehen, mit dem ein Frischgaseinlass 7 des jeweiligen Zylinders 3 steuerbar ist. Es ist klar, dass der jeweilige Zylinder 3 auch wenigstens ein Auslassventil aufweist, das hier jedoch nicht dargestellt ist. An jeden Zylinder 3 ist eine Frischgasleitung 8 angeschlossen, über die dem jeweiligen Brennraum 4 Frischgas zuführbar ist. Beim Frischgas handelt es sich üblicherweise um Luft. Die jeweilige Frischgasleitung 8 kann einen im Motorblock 2 verlaufenden Leitungsabschnitt 9 sowie einen außerhalb des Motorblocks 2 verlaufenden Leitungsabschnitt 10 aufweisen, der beispielsweise Teil einer Frischgasanlage 11 ist, die zur Versorgung der Brennkraftmaschine 1 mit Frischgas an den Motorblock 2 angeschlossen ist.

Ferner weist die Brennkraftmaschine 1 für jeden Zylinder 3 zumindest ein Frischgasventil 12 auf, mit dem die jeweilige Frischgasleitung 8 steuerbar ist. Hierzu ist das jeweilige Frischgasventil 12 in der jeweiligen Frischgasleitung 8 angeordnet, und zwar stromauf des jeweiligen Einlassventils 6. Bei der Brennkraftmaschine 1 kann es sich grundsätzlich um einen beliebigen Verbrennungsmotor der Kolbenbauweise handeln, also insbesondere um einen Benzinmotor, einen Dieselmotor oder um einen Erdgasmotor. Bevorzugt handelt es sich bei der Brennkraftmaschine 1 jedoch um eine großvolumige Brennkraftmaschine, die insbesondere je Zylinder ein Volumen von mehr als einem Liter Hubraum aufweist. Die Brennkraftmaschine 1 kommt dabei z.B. in Fahrzeugen zur Anwendung, und zwar bevorzugt in Schiffen, Schienenfahrzeugen oder Straßenfahrzeugen. Bei großvolumigen Brennkraftmaschinen 1 können je Zylinder 3 auch zwei oder mehr Frischgasleitungen 8 vorgesehen sein, in denen dann jeweils ein derartiges Frischgasventil 12 angeordnet ist.

Für die Betätigung der Frischgasventile 12 ist eine Steuerung 13 vorgesehen, die auf geeignete, hier nicht dargestellte Weise mit dem jeweiligen Frischgasventil 12 gekoppelt ist. Die Steuerung 13 kann außerdem mit einer hier nicht gezeigten Motorsteuerung der Brennkraftmaschine 1 gekoppelt sein oder zumindest teilweise in eine derartige Motorsteuerung integriert sein. Die Steuerung 13 und die Frischgasventile 12 sind so ausgestaltet, dass damit im jeweiligen Zylinder 3 eine Kälteladung realisierbar ist. Bei einer derartigen Kälteladung wird das jeweilige Frischgasventil 12 so angesteuert, dass es den durchströmbaren Querschnitt der Frischgasleitung 8 sperrt, während das jeweilige Einlassventil 6 noch offen ist, also bevor das jeweilige Einlassventil 6 schließt. Je nach Zylinderanzahl und Drehzahl der Brennkraftmaschine 1 können dabei mehrere Ladungswechselvorgänge pro Sekunde je Zylinder 3 realisiert werden, so dass das Frischgasventil 12 insbesondere zur Realisierung von Schaltzeiten im Millisekundenbereich ausgestaltet sein kann.

Das Frischgasventil 12 weist eine Klappe 14 auf, die vorzugsweise an einer Welle 15 drehfest angebracht ist und die um eine Drehachse 16 drehverstellbar ist. Die Klappe 14 ist vorzugsweise als Schmetterlingsklappe ausgestaltet, deren Flügel bezüglich der Drehachse 14 radial von der Welle 15 abstehen. Die Drehachse 16 erstreckt sich dabei quer zu einer durch Pfeile angedeuteten Hauptströmungsrichtung 17, die sich in der Frischgasleitung 8 bei geöffnetem Frischgasventil 12 einstellt. Zweckmäßig durchsetzt die Drehachse 16 die Frischgasleitung 8 im wesentlichen mittig, wodurch die Klappe 14 einen symmetrischen Aufbau besitzt.

Das jeweilige Frischgasventil 12 ist als kontinuierlich arbeitendes Ventil ausgestaltet. Ein derartiges, kontinuierlich arbeitendes Frischgasventil 12 charakterisiert sich dadurch, dass seine Klappe 14 zur Realisierung von Schaltvorgängen permanent mit gleichbleibender, hier durch einen Pfeil angedeuteter Drehrichtung 18 und mit einer von den jeweils gewünschten Schaltzeiten abhängigen Drehgeschwindigkeit verstellbar ist. "Gleichbleibende Drehrichtung" bedeutet hierbei, dass die Drehrichtung innerhalb des Schaltbetriebs des Frischgasventils 12 gleich bleibt, jedoch bei verschiedenen Schaltbetrieben unterschiedlich sein kann. In der Folge durchfährt die Klappe 14 bei der Realisierung von Schaltvorgängen in der Drehrichtung 18 nacheinander einen durch eine geschweifte Klammer angedeuteten Schließwinkelbereich 19, einen durch eine geschweifte Klammer angedeuteten Sperrwinkelbereich 20 und einen durch eine geschweifte Klammer angedeuteten Öffnungswinkelbereich 21. In jedem Schließwinkelbereich 19 nimmt der durchströmbare Querschnitt der Frischgasleitung 8 ab. In jedem Sperrwinkelbereich 20 ist der durchströmbare Querschnitt der Frischgasleitung 8 konstant gesperrt oder zumindest auf einen minimalen Wert eingestellt. In jedem Öffnungswinkelbereich 21 nimmt der durchströmbare Querschnitt der Frischgasleitung 8 wieder zu. Jeder Öffnungswinkelbereich 21 endet bei einem maximal geöffneten durchströmbaren Querschnitt der Frischgasleitung 8. In diesem maximal geöffneten Schaltzustand erstreckt sich die Klappe 14 in einer Ebene 22, die sich parallel zur Hauptströmungsrichtung 17 erstreckt und in der die Drehachse 16 liegt. Jeder Schließwinkelbereich 19 beginnt bei diesem maximal geöffneten Querschnitt. Dementsprechend geht jeder Öffnungswinkelbereich 21 unmittelbar in den nächsten Schließwinkelbereich 19 über. Bevorzugt wird die hier gezeigte symmetrische Bauweise, bei der zwei gleich große Schließwinkelbereiche 19, zwei gleich große Sperrwinkelbereiche 20 und zwei gleich große Öffnungswinkelbereiche 21 jeweils bezüglich der Drehachse 19 zueinander diametral gegenüberliegend angeordnet sind.

Die Klappe 14 des jeweilige Frischgasventils 12 kann mit einer konstanten Drehgeschwindigkeit rotieren, deren Wert vom aktuellen, z.B. durch Last und/oder Drehzahl bestimmten Betriebszustand der Brennkraftmaschine 1 abhängt. Ebenso ist es möglich, das Frischgasventil 12 gezielt so anzusteuern, dass sich die Drehgeschwindigkeit der Klappe 14 auch bei einem stationären Betriebszustand beim Durchfahren der einzelnen Winkelbereiche 19, 20, 21 ändert, also insbesondere während einzelner Umdrehungen. Beispielsweise kann die Klappe 14 bei jeder Umdrehung im Öffnungswinkelbereich 21 und im Schließwinkelbereich 19 schneller drehen als im Sperrwinkelbereich 20. Somit kann die Klappe 14 innerhalb einzelner Umdrehungen beschleunigen und abbremsen, um die jeweils gewünschten Schaltzeitpunkte einzustellen.

Entsprechend den Fig. 1 bis 5 ist bei bevorzugten Ausführungsformen der Frischgasventile 12 jeweils zwischen einer der Klappe 14 zugewandten Innenseite 23 eines Wandabschnitts 24, mit dem die Klappe 14 zur Ausbildung des Sperrwinkelbereichs 20 zusammenwirkt, und einer Klappenkante 25, die bezüglich der Drehachse 16 radial außen liegt, innerhalb des Sperrwinkelbereichs 20 ein Drosseldichtspalt 26 ausgebildet. Ein derartiger Drosseldichtspalt 26 erzeugt die gewünschte Dichtungswirkung durch einen Drosseleffekt, also ohne direkte körperliche Kontaktierung zwischen der Klappenkante 25 und der Innenseite 23. Im Drosseldichtspalt 26 liegt ein hier nicht erkennbarer radialer Abstand zwischen der Klappenkante 25 und der Innenseite 23 vor, der das Spaltmaß beziehungsweise die Spaltweite bildet.

Der jeweilige Sperrwinkelbereich 20 ist in einer zur Klappe 14 benachbarten Wandung 27 durch eine Vertiefung 28 gebildet, die zylindersegmentförmig ausgestaltet ist, also im gezeigten Querschnitt ein Kreisbogenprofil aufweist. Hierdurch wird die Sperrung der Frischgasleitung 8 im gesamten Sperrwinkelbereich 20 erreicht.

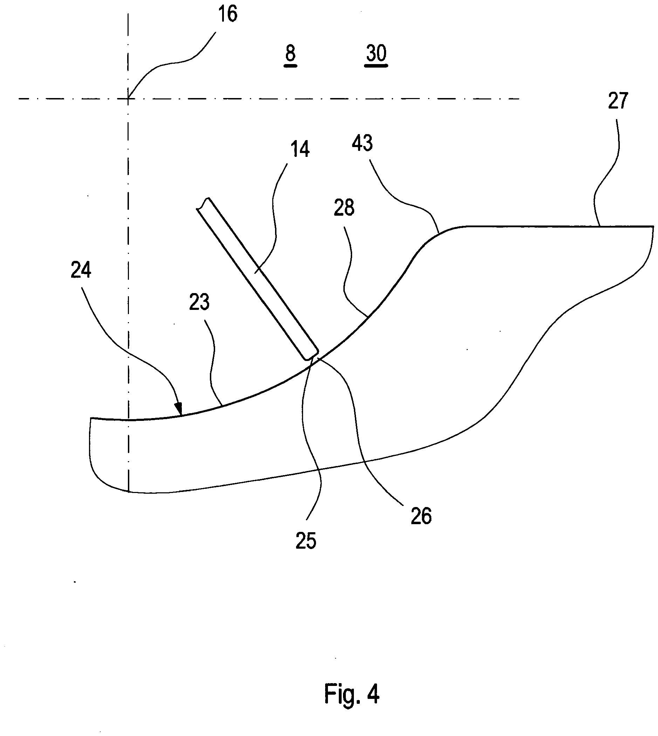

Gemäß Fig. 4 kann zwischen dem Teil des Leitungsabschnitt 30, in dem die Vertiefung 28 ausgebildet ist, und dem daran anschließenden Teil, in dem insbesondere ein konstanter Strömungsquerschnitt vorliegt, ein abgerundeter Übergang 43 ausgebildet sein. Dieser Übergang 43 kann einerseits zur Reduzierung einer Geräuschentwicklung und andererseits zur Reduzierung des Strömungswiderstands vorteilhaft sein.

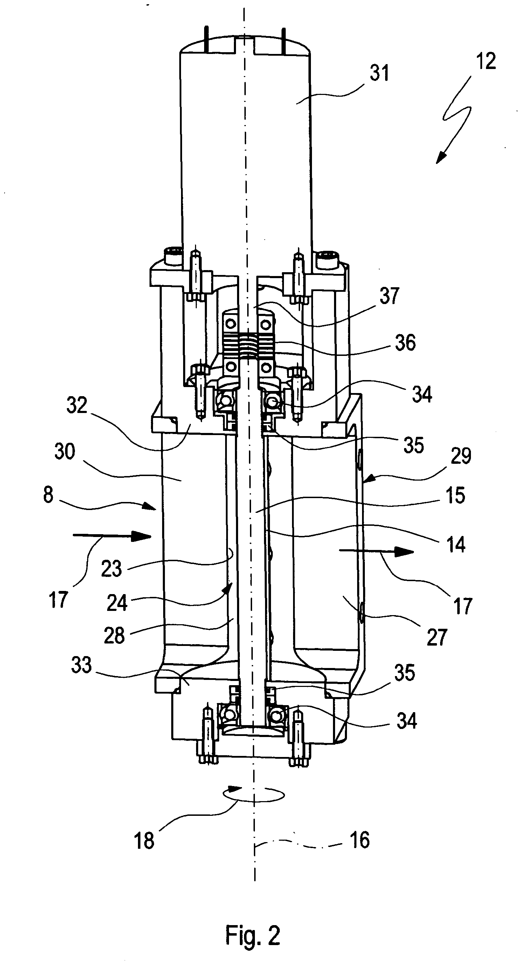

Bei den in den Fig. 2 bis 5 gezeigten Ausführungsformen kann das Frischgasventil 12 jeweils ein Gehäuse 29 aufweisen, in dem ein Leitungsabschnitt 30 ausgebildet ist. Im Einbauzustand ergänzt dieser Leitungsabschnitt 30 die Frischgasleitung 8 und bildet einen integralen Bestandteil dieser Frischgasleitung 8. Im Leitungsabschnitt 30 ist die Klappe 14 angeordnet. Ferner umfasst das jeweilige Frischgasventil 12 einen Drehantrieb 31 zum Antreiben der Welle 15. Beim Drehantrieb 31 kann es sich vorzugsweise um einen bürstenlosen Gleichstrommotor handeln, der insbesondere mit einem hier nicht näher dargestellten Encoder zur Lageregelung ausgestattet sein kann. Ebenso kann der Drehantrieb 31 durch einen Schrittmotor gebildet sein, der grundsätzlich ohne Lagesensor oder Encoder auskommt.

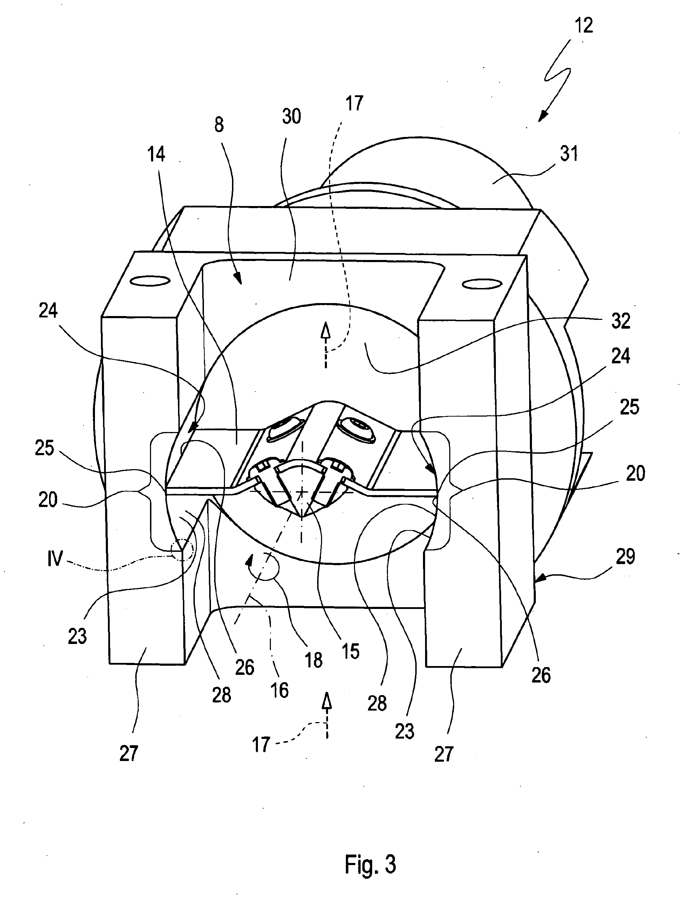

Bei der in den Fig. 2 und 3 gezeigten Ausführungsform umfasst das Frischgasventil 12 zwei Lagerschalen 32 und 33, die jeweils einen Wandabschnitt der Frischgasleitung 8 beziehungsweise des Leitungsabschnitts 30 bilden. Die Lagerschalen 32, 33 sind an die Frischgasleitung 8 beziehungsweise an das Gehäuse 29 angebaut und weisen jeweils ein Lager 34 für die Welle 15 auf. Ebenso enthalten die Lagerschalen 32, 33 entsprechende Dichtungen 35. Ein drehsteifes und biegeelastisches Kupplungselement 36 koppelt die Welle 15 mit einer Antriebswelle 37 des Drehantriebs 31.

Zur Vermeidung eines Kontakts zwischen Klappe 14 und Gehäuse 29 beziehungsweise zur Vermeidung eines zu großen Drosseldichtspalts 26 können für die Klappe 14 und das Gehäuse 29 Werkstoffe ausgewählt werden, die einen möglichst kleinen Wärmedehnungskoeffizienten aufweisen. Im vorliegenden Zusammenhang wird unter einem "kleinen" Wärmedehnungskoeffizienten ein Wärmedehnungskoeffizient verstanden, der maximal 5 x 10⁻⁶/K bei 20°C beträgt. Im Idealfall sollen die Klappe 14 und/oder das Gehäuse 29 hinsichtlich thermisch bedingter Dehnungen praktisch invariant sein. Dabei ist klar, dass ein Wärmedehnungskoeffizient mit dem Wert Null quasi nicht möglich ist, so dass Materialien, die hinsichtlich thermisch bedingter Dehnungen quasi invariant sind, im vorliegenden Zusammenhang einen Wärmedehnungskoeffizienten von maximal etwa 2 x 10⁻⁶/K bei 20°C aufweisen. Beispielsweise kann das Gehäuse aus Invar hergestellt werden, dessen Wärmedehnungskoeffizient etwa 1,7 bis 2,0 x 10⁻⁶/K bei 20°C beträgt. Einen ähnlich kleinen Wärmedehnungskoeffizienten kann die Klappe 14 beispielsweise dann aufweisen, wenn sie als Glasfaser-Verbundbauteil hergestellt ist. Durch die kleinen oder minimalen Wärmedehnungskoeffizienten bei Klappe 14 und Gehäuse 29 wird ebenfalls erreicht, dass sich der Drosseldichtspalt 26 durch sich ändernde Temperaturen im Frischgasventil 12 quasi nicht oder nur geringfügig verändert. Alternativ oder zusätzlich zu Materialien mit kleinen Wärmedehnungskoeffizienten können die Lagerschalen 32, 33 bezüglich des Gehäuses 29 separat herstellbare Bauteile bilden und können auf geeignete Weise am Gehäuse 29 befestigt sein. Die Lagerschalen 32, 33 und die Lager 34 können hinsichtlich ihrer Materialauswahl so aufeinander abgestimmt sein, dass sie ähnliche Wärmedehnungskoeffizienten aufweisen. Im vorliegenden Zusammenhang sind Wärmedehnungskoeffizienten "ähnlich", wenn sie weniger als 20% voneinander abweichen oder gleich sind. Durch diese Bauweise wird erreicht, dass die Lager 34 im Betrieb des Frischgasventils 12, bei dem es zu einer Erwärmung des Ventils 12 kommen kann, aufgrund thermisch bedingter Wärmedehnungen innerhalb ihrer jeweiligen, hier nicht näher bezeichneten Lageaufnahme nicht unzulässig stark verspannt werden und/oder nicht unzulässig großes Spiel bekommen. Ferner kann vorgesehen sein, die Klappe 14 und das Gehäuse 29 hinsichtlich der Werkstoffauswahl so aufeinander abzustimmen, dass Wärmedehnungseffekte, die bei den im ordnungsgemäßen Betrieb des Frischgasventils 12 auftretenden Temperaturen in Erscheinung treten, zu keiner Kontaktierung zwischen Klappe 14 und Gehäuse 29 führen beziehungsweise nicht zu einer unerwünscht starken Vergrößerung des Drosseldichtspalts 26 führen. Beispielsweise kann dies dadurch erreicht werden, dass die für die Klappe 14 und das Gehäuse 29 verwendeten Materialien ähnliche Wärmedehnungskoeffizienten aufweisen. Zum Begriff "ähnlich" wird auf das oben Gesagte verwiesen. Hierdurch können unerwünschte Leckagen beziehungsweise Schleifkontakte zwischen der Innenseite 23 und der Klappenkante 26 vermieden werden. Dabei können Klappe 14 und Gehäuse 29 durchaus aus unterschiedlichen Materialien hergestellt sein. Beispielsweise ist die Klappe 14 bevorzugt ein Kunststoffteil, beispielsweise ein laminiertes Glasfaser- oder Kohlefaser-Verbundbauteil. Im Unterschied dazu kann es sich beim Gehäuse 29 um ein Gussteil aus einer Metalllegierung handeln.

Zum Einstellen oder Justieren des Drosseldichtspalts 26, zum Beispiel hinsichtlich Spaltlänge und Spaltweite, kann vorgesehen sein, dass zumindest eine der Lagerschalen 32, 33 relativ zum Gehäuse 29 justierbar ausgestaltet ist. Ebenso ist es grundsätzlich möglich, zumindest eines der Lager 34 relativ zur jeweiligen Lagerschale 32, 33 justierbar auszugestalten. Alternativ zu den genannten Justagemöglichkeiten zum Einstellen eines optimalen Drosseldichtspalts 26 gibt es bereits im Rahmen der Herstellung des Frischgasventils 12 weitere Möglichkeiten, den Drosseldichtspalt 26 mit gewünschten Abmessungen herzustellen. Beispielsweise kann zunächst die Klappe 14 vorgefertigt werden, wobei sie insbesondere im Bereich der Klappenkanten 25 noch nicht ihre endgültige Form aufweist. Die insoweit unfertige Klappe 14 kann im Gehäuse 29 positioniert werden, zum Beispiel durch die ordnungsgemä-βe Montage der Welle 15 mit daran befestigter Klappe 14. Die Positionierung der Klappe 14 im Gehäuse 29 erfolgt in einer vorbestimmten Relativlage oder Solllage. Hierbei sind Klappe 14 und Gehäuse 29 so aufeinander abgestimmt, dass in diesem Ausgangszustand in radialer Richtung zwischen der jeweiligen Klappenkante 25 und der Innenseite 23 ein Abstand vorliegt, der gegenüber dem noch herzustellenden Drosseldichtspalt 26 beziehungsweise gegenüber dessen Spaltweite verkleinert ist. Insbesondere kann die Klappenkante 25 zumindest bereichsweise die Innenseite 23 berühren und/oder sogar überlappen. Unter Beibehaltung dieser Solllage zwischen Klappe 14 und Gehäuse 29 wird durch Bearbeitung der Klappenkante 25 und/oder der Innenseite 23 der Drosseldichtspalt 26 hergestellt. Beispielsweise wird der Drosseldichtspalt 26 durch Beschneiden der Klappenkante 25 und/oder der Innenseite 23 freigeschnitten. Denkbar ist beispielsweise ein Laserschneidverfahren oder ein Wasserstrahlschneidverfahren. Bei einer anderen Ausführungsform kann die Klappe 14 beispielsweise durch Spritzgießen, insbesondere aus Kunststoff, hergestellt werden. Dabei kann die Innenseite 23 in einem Gießwerkzeug zum Spritzgießen der Klappe 14 einen Wandabschnitt bilden, der zur Begrenzung der Klappenkante 25 dient. Vorzugsweise lassen sich Gießparameter, wie Temperatur und Druck, und der Klappenwerkstoff so wählen, dass der Drosseldichtspalt 26 beim Erstarren des gespritzten Klappenwerkstoffs von selbst entsteht, und zwar durch Schwindung des erkaltenden Klappenwerkstoffs. Alternativ kann auch die Innenseite 23 durch Spritzgießen hergestellt werden, wobei dann die Klappe 14 beziehungsweise deren Klappenkante 25 in einem Gießwerkzeug zum Spritzgießen der Innenseite 23 einen Wandabschnitt bildet, der zur Begrenzung der Innenseite 23 dient. Auch hierbei lassen sich dann die Gießparameter und der verwendete Werkstoff so wählen, dass der Drosseldichtspalt 26 beim Erstarren von selbst entsteht. Bei einer weiteren Variante kann die vorgefertigte, jedoch noch nicht endfertige Klappe 14 in einer vorbestimmten Relativlage oder Solllage im Gehäuse 29 positioniert werden, zum Beispiel durch Montage der damit fest verbundenen Welle 15. Die unfertige Klappe 14 und das Gehäuse 29 sind dabei vorzugsweise so aufeinander abgestimmt, dass in diesem Ausgangszustand zwischen der Innenseite 23 und der jeweiligen Klappenkante 25 ein Abstand vorliegt, der gegenüber dem noch herzustellenden Drosseldichtspalt 26 beziehungsweise dessen Spaltweite vergrößert ist. Die so positionierte Klappe 14 kann nun durch gezieltes Erwärmen und plastisches Verformen endgeformt werden, bis sich die Klappenkante 25 in Richtung der Innenseite 23 bewegt. Mit diesem Umformvorgang wird gleichzeitig der Drosseldichtspalt 26 ausgebildet. Ein derartiger Umformvorgang kann beispielsweise durch sogenanntes Heißpressen realisiert werden. Ebenso ist es möglich, die Erwärmung des zu verformenden Abschnitts mittels Ultraschall durchzuführen.

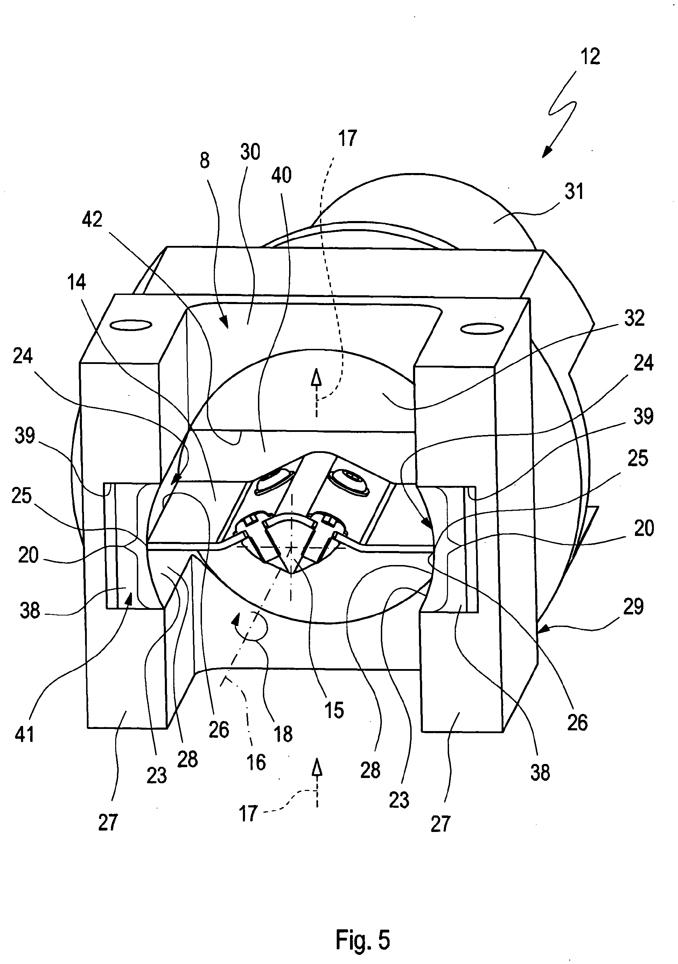

Fig. 5 zeigt eine andere Ausführungsform, bei der die jeweilige Innenseite 23, die mit der jeweiligen Klappenkante 25 im Sperrwinkelbereich 20 zur Ausbildung des Drosseldichtspalts 26 zusammenwirkt, jeweils an einem Wandbauteil 38 ausgebildet ist. Dieses bildet bezüglich der Wand 27, welche die Klappe 14 im Sperrwinkelbereich 20 umschließt, beziehungsweise bezüglich des Gehäuses 29 ein separates Bauteil. Das jeweilige Wandbauteil 38 ist dabei in die Wand 27 beziehungsweise in das Gehäuse 29 eingesetzt, wozu die jeweilige Wand 27 beziehungsweise das Gehäuse 29 eine entsprechende Aufnahme 39 aufweist. Die Wandung, in der die Vertiefung 28 zur Realisierung des Sperrwinkelbereichs 20 ausgebildet ist, ist bei der in Fig. 5 gezeigten Ausführungsform somit durch das Wandbauteil 38 gebildet, während sie bei der in Fig. 3 gezeigten Ausführungsform ebenfalls durch die Wand 27 gebildet ist. Das jeweilige Wandbauteil 38 kann beispielsweise quer zur Drehachse 16 relativ zur Wand 27 bzw. zum Gehäuse 29 verstellbar sein. Insbesondere bildet das jeweilige Wandbauteil 38 im Sperrwinkelbereich 20 mit seiner der Klappe 14 zugewandten Innenseite 23 den auf die Position der Klappenkante 25, z.B. hinsichtlich Spalthöhe und Spaltlage, einstellbaren Drosseldichtspalt 26. Die beiden hier gezeigten Wandbauteile 38 können im Bereich der Lagerschalen 32, 33 beispielsweise über einen Steg 40 fest miteinander verbunden sein, um so ein relativ zur Klappe 14 einheitlich verstellbares Einlegeteil 41 auszubilden. Der jeweilige Steg 40 kann vorzugsweise bündig in eine entsprechende Aussparung 42 eingesetzt sein, die in die jeweiligen Lagerschale 32, 33 eingearbeitet ist. Durch die Verstellbarkeit der Wandbauteile 38 bzw. des Einlegeteils 41 relativ zur Klappe 14 und relativ zur jeweiligen Wand 27 bzw. relativ zum Gehäuse 29 lässt sich der Drosseldichtspalt 26 im Bereich der beiden Sperrwinkelabschnitte 20 justieren. Dies kann durch einen einmaligen Vorgang während der Herstellung des jeweiligen Frischgasventils 12 durchgeführt werden. Ebenso kann für die Wandbauteile 38 bzw. für das Einlegeteil 41 eine permanente schwimmende Lagerung in den Wänden 27 bzw. im Gehäuse 29 realisiert werden, die ständig eine Nachjustierung oder Neujustierung des Drosseldichtspalts 26 ermöglicht. Um eine Selbstzentrierung der Wandbauteilabschnitte 38 bzw. des Einlegeteils 41 relativ zur Klappe 14 zu realisieren, kann auf die Klappe 14 bzw. auf deren Klappenkanten 25 und/oder auf die Innenseiten 23 eine Beschichtung aufgetragen werden, welche die Spalthöhe des Drosseldichtspalts 26 zumindest im Montagezustand verkleinert oder sogar schließt. Diese Beschichtung kann sich im späteren Betrieb des Frischgasventils 12 zumindest teilweise abtragen durch die Kontaktierung mit der Innenseite 23 bzw. mit der Klappenkante 25. Es ist klar, dass zwischen dem jeweiligen Wandbauteil 38 und der jeweiligen Wand 27 zumindest eine Dichtung vorgesehen sein kann, um Leckageströmungen zu vermeiden, welche die in ihrem Schließwinkelbereich 20 liegende Klappe 14 umgehen.

Zur Realisierung der gewünschten Kälteladung in den Zylindern 3 bei einem insbesondere durch die Drehzahl und/oder die Last definierten Betriebszustand der Brennkraftmaschine 1 steuert die Steuerung 13 die Frischgasventile 12 so an, dass die Klappen 14 in der vorgegebenen Drehrichtung 18 mit einer vorbestimmten Drehgeschwindigkeit rotieren und somit permanent nacheinander Öffnungswinkelbereiche 21, Schließwinkelbereiche 19 und Sperrwinkelbereiche 20 durchfahren. Dabei ist ein derartiger Kälteladungsvorgang dadurch charakterisiert, dass während eines Ansaughubs des Kolbens 5, der in einem oberen Totpunkt des Kolbens 5 beginnt, zunächst das jeweilige Einlassventil 6 und das jeweilige Frischgasventil 12 geöffnet sind. Damit das jeweilige Frischgasventil 12 geöffnet ist, befindet sich seine Klappe 14 in einem der Öffnungswinkelbereiche 21 oder in einem der Schließwinkelbereiche 19. Das jeweilige Einlassventil 6 schließt im Bereich eines unteren Totpunkts des Kolbens 5. Bei einem erwünschten Kälteladungsvorgang beendet nicht das jeweilige Einlassventil 6, sondern das jeweilige Frischgasventil 12 die Frischgasbeladung des jeweiligen Brennraums 4. Das bedeutet, dass das jeweilige Frischgasventil 12 die jeweilige Frischgasleitung 8 sperrt, bevor das jeweilige Einlassventil 6 schließt. Das bedeutet, dass die jeweilige Klappe 14 einen Schließwinkelbereich 20 erreicht und dadurch den durchströmbaren Querschnitt der Frischgasleitung 8 sperrt oder zumindest minimiert, während das jeweilige Einlassventil 6 noch geöffnet ist.

## Patentansprüche

1. Brennkraftmaschine, insbesondere in einem Fahrzeug,
- mit mehreren Zylindern (3), in denen jeweils ein Brennraum (4) ausgebildet und ein Kolben (5) hubverstellbar angeordnet ist,
- mit wenigstens einem Einlassventil (6) je Zylinder (3),
- mit wenigstens einer Frischgasleitung (8) je Zylinder (3) zum Zuführen von Frischgas zum jeweiligen Brennraum (4),
- mit wenigstens einem Frischgasventil (12) je Zylinder (3), das in der jeweiligen Frischgasleitung (8) stromauf des jeweiligen Einlassventils (6) angeordnet ist und mit dem die jeweilige Frischgasleitung (8) steuerbar ist,
- mit einer Steuerung (13) zum Betätigen der Frischgasventile (12),
- wobei die Steuerung (13) und die Frischgasventile (12) zur Realisierung einer Kälteladung der Zylinder (3) ausgestaltet sind, bei der das jeweilige Frischgasventil (12) die jeweilige Frischgasleitung (8) sperrt, bevor das jeweilige Einlassventil (6) schließt,
- wobei das jeweilige Frischgasventil (12) ein um eine Drehachse (16) drehverstellbares Ventilglied (14) aufweist,
- wobei das jeweilige Frischgasventil (12) als kontinuierlich arbeitendes Ventil ausgestaltet ist, dessen Ventilglied (14) zur Realisierung von Schaltvorgängen permanent mit gleichbleibender Drehrichtung (18) und mit von den gewünschten Schaltzeiten abhängiger Drehgeschwindigkeit verstellbar ist, so dass das Ventilglied (14) in der Drehrichtung (18) nacheinander einen Schließwinkelbereich (19), in dem der durchströmbare Querschnitt der jeweiligen Frischgasleitung (8) abnimmt, einen Sperrwinkelbereich (20), in dem der durchströmbare Querschnitt der jeweiligen Frischgasleitung (8) minimal oder gesperrt ist, und einen Öffnungswinkelbereich (21) durchfährt, in dem der durchströmbare Querschnitt der jeweiligen Frischgasleitung (8) bis zum nächsten Schließwinkelbereich (19) zunimmt,
**dadurch gekennzeichnet,**
- **dass** das Ventilglied eine Klappe (14) ist,
- **dass** zwischen einer der Klappe (14) zugewandten Innenseite (23) eines Wandabschnitts (24), mit dem die Klappe (14) zur Ausbildung des Sperrwinkelbereichs (20) zusammenwirkt, und einer bezüglich der Drehachse (16) radial außen liegenden Klappenkante (25) im Sperrwinkelbereich (20) ein Drosseldichtspalt (26) ausgebildet ist,
- **dass** die mit der Klappenkante (25) im Sperrwinkelbereich (20) den Drosseldichtspalt (26) ausbildende Innenseite (23) an einem Wandbauteil (38) ausgebildet ist, das bezüglich einer die Klappe (14) im Sperrwinkelbereich (20) umschließenden Wand (27) ein separates Bauteil bildet.

2. Brennkraftmaschine nach Anspruch 1,
**dadurch gekennzeichnet,**
**dass** das jeweilige Frischgasventil (12) so ansteuerbar ist, dass seine Klappe (14) während einer Umdrehung eine variierende Drehgeschwindigkeit besitzt.

3. Brennkraftmaschine nach Anspruch 1 oder 2,
**dadurch gekennzeichnet,**
**dass** das Wandbauteil (38) in die Wand (27) eingesetzt ist.

4. Brennkraftmaschine nach einem der Ansprüche 1 bis 3, **dadurch gekennzeichnet,**
- **dass** der jeweilige Sperrwinkelbereich (20) durch eine zylindersegmentartige Vertiefung (28) gebildet ist, die in einer zur Klappe (14) benachbarten Wandung (27; 38) ausgebildet ist, und/oder
- **dass** die Vertiefung (28) eingangseitig und/oder ausgangsseitig einen abgerundeten Übergang (43) zur benachbarten Wandung (27; 38) aufweist.

5. Brennkraftmaschine nach einem der Ansprüche 1 bis 4,
**dadurch gekennzeichnet,**
**dass** das jeweilige Frischgasventil (12) ein Gehäuse (29) aufweist, das einen Leitungsabschnitt (30) enthält, der im Einbauzustand die jeweilige Frischgasleitung (8) ergänzt und in dem die Klappe (14) angeordnet ist.

6. Brennkraftmaschine nach einem der Ansprüche 1 bis 5,
**dadurch gekennzeichnet,**
**dass** das jeweilige Frischgasventil (12) als Drehantrieb (31) für die Klappe (14) einen Schrittmotor oder einen bürstenlosen Gleichstrommotor aufweist, der einen Encoder zur Lageregelung aufweisen kann.

7. Brennkraftmaschine nach einem der Ansprüche 1 bis 6,
**dadurch gekennzeichnet,**
**dass** das Wandbauteil (38) relativ zur Wand (27) quer zur Drehachse (16) verstellbar angeordnet ist.

8. Brennkraftmaschine nach einem der Ansprüche 1 bis 7,
**dadurch gekennzeichnet,**
**dass** zwei die Klappe (14) bezüglich der Drehachse (16) axial begrenzende Wandabschnitte der Frischgasleitung (8) oder des Leitungsabschnitts (30) jeweils durch eine Lagerschale (32, 33) gebildet sind, die jeweils an die Frischgasleitung (8) oder an das Gehäuse (29) angebaut sind und ein Lager (34) für eine die Klappe (14) tragende, koaxial zur Drehachse (16) angeordnete Welle (15) aufweisen.

9. Brennkraftmaschine nach Anspruch 8,
**dadurch gekennzeichnet,**
- **dass** die Lagerschalen (32, 33) und die Lager (34) ähnliche Wärmedehnungskoeffizienten aufweisen, und/oder
- **dass** die Klappe (14) und das Gehäuse (29) ähnliche Wärmedehnungskoeffizienten aufweisen, und/oder
- **dass** die Klappe (14) und/oder das Gehäuse (29) einen kleinen Wärmedehnungskoeffizienten aufweist/aufweisen oder hinsichtlich thermisch bedingter Dehnungen quasi invariant ist/sind, und/oder
- **dass** die Klappe (14) einen anderen Wärmedehnungskoeffizienten aufweist als die Lager (34) und/oder als die Lagerschalen (32, 33), und/oder
- **dass** das Gehäuse (29) einen anderen Wärmedehnungskoeffizienten aufweist als die Lager (34) und/oder als die Lagerschalen (32, 33), und/oder
- **dass** zumindest eine der Lagerschalen (32, 33) relativ zum Gehäuse (29) zum Einstellen des Drosseldichtspalts (26) justierbar ausgestaltet ist, und/oder
- **dass** zumindest eines der Lager (34) relativ zur Lagerschale (32, 33) zum Einstellen des Drosseldichtspalts (26) justierbar ausgestaltet ist.

10. Kontinuierlich arbeitendes Frischgasventil (12) zum Steuern einer Frischgas einem Zylinder (3) einer Brennkraftmaschine (1) zuführenden Frischgasleitung (8), insbesondere für eine Brennkraftmaschine (1) nach einem der Ansprüche 1 bis 9, mit einem um eine Drehachse (16) drehverstellbarem Ventilglied (14), das zur Realisierung von Schaltvorgängen permanent mit gleichbleibender Drehrichtung (18) und mit von den gewünschten Schaltzeiten abhängiger Drehgeschwindigkeit verstellbar ist, so dass das Ventilglied (14) in der Drehrichtung (18) nacheinander einen Schließwinkelbereich (19), in dem der durchströmbare Querschnitt der jeweiligen Frischgasleitung (8) abnimmt, einen Sperrwinkelbereich (20), in dem der durchströmbare Querschnitt der jeweiligen Frischgasleitung (8) minimal oder gesperrt ist, und einen Öffnungswinkelbereich (21) durchfährt, in dem der durchströmbare Querschnitt der jeweiligen Frischgasleitung (8) bis zum nächsten Schließwinkelbereich zunimmt
**dadurch gekennzeichnet,**
- **dass** das Ventilglied eine Klappe (14) ist,
- **dass** zwischen einer der Klappe (14) zugewandten Innenseite (23) eines Wandabschnitts (24), mit dem die Klappe (14) zur Ausbildung des Sperrwinkelbereichs (20) zusammenwirkt, und einer bezüglich der Drehachse (16) radial außen liegenden Klappenkante (25) im Sperrwinkelbereich (20) ein Drosseldichtspalt (26) ausgebildet ist,
- **dass** die mit der Klappenkante (25) im Sperrwinkelbereich (20) den Drosseldichtspalt (26) ausbildende Innenseite (23) an einem Wandbauteil (38) ausgebildet ist, das bezüglich einer die Klappe (14) im Sperrwinkelbereich (20) umschließenden Wand (27) ein separates Bauteil bildet.

## Claims

1. An internal combustion engine, in particular in a vehicle, comprising
- a plurality of cylinders (3), in each of which a combustion chamber (4) is formed and a piston (5) is arranged in a stroke-adjustable manner,
- at least one inlet valve (6) per cylinder (3),
- at least one fresh gas line (8) per cylinder (3) for feeding fresh gas to the respective combustion chamber (4),
- at least one fresh gas valve (12) per cylinder (3) which is arranged in the respective fresh gas line (8) upstream of the respective inlet valve (6) and by means of which the respective fresh gas line (8) can be controlled,
- a control mechanism (13) for actuating the fresh gas valves (12),
- wherein the control mechanism (13) and the fresh gas valves (12) are configured for implementing a cold charging of the cylinders (3) during which the respective fresh gas valve (12) blocks the respective fresh gas line (8) before the respective inlet valve (6) closes,
- wherein the respective fresh gas valve (12) has a valve member (14) which is rotatably adjustable about an axis of rotation (16),
- wherein the respective fresh gas valve (12) is configured as a continuously operating valve, the valve member (14) of which, for implementing switching processes, is permanently adjustable with a constant rotational direction (18) and a rotational speed that depends on the desired switching times so that the valve member (14), in the rotational direction (18), passes successively through a closing angle region (19) in which the respective fresh gas line's (8) cross-section through which a flow can pass decreases, a blocking angle region (20) in which the respective fresh gas line's (8) cross-section through which a flow can pass is at a minimum or blocked, and an opening angle region (21) in which the respective fresh gas line's (8) cross-section through which a flow can pass increases up to the next closing angle region (19),
**characterized in**
- **that** the valve member is a flap (14),
- **that** between an inner side (23), which faces the flap (14), of a wall section (24) with which the flap (14) interacts for forming the blocking angle region (20) and a flap edge (25) located radially on the outside with respect to the axis (16) of rotation, a throttling sealing gap (26) is formed in the blocking angle region (20),
- **that** the inner side (23), which, together with the flap edge (25), forms the throttling sealing gap (26) in the blocking angle region (20), is formed on a wall component (38) which, with respect to a wall (27) enclosing the flap (14) in the blocking angle region (20), forms a separate component.

2. The internal combustion engine according to claim 1,
**characterized in**
**that** the respective fresh gas valve (12) can be controlled such that its flap (14), during one revolution, has a varying rotational speed.

3. The internal combustion engine according to claim 1 or claim 2,
**characterized in**
**that** the wall component (38) is inserted in the wall (27).

4. The internal combustion engine according to any one of the claims 1 to 3,
**characterized in**
- **that** the respective blocking angle region (20) is formed by a cylinder segment-like recess (28) which is formed in a wall (27; 38) adjacent to the flap (14), and/or
- **that** the recess (28), on the entry side and/or the exit side, has a rounded transition (43) to the adjacent wall (27; 38).

5. The internal combustion engine according to any one of the claims 1 to 4,
**characterized in**
**that** the respective fresh gas valve (12) has a housing (29) which contains a line section (30) which, in the installed state, completes the respective fresh gas line (8) and in which the flap (14) is arranged.

6. The internal combustion engine according to any one of the claims 1 to 5,
**characterized in**
**that** as a rotary drive (31) for the flap (14), the respective fresh gas valve (12) has a stepper motor or a brushless direct current motor which can comprise an encoder for position control.

7. The internal combustion engine according to any one of the claims 1 to 6,
**characterized in**
**that** the wall component (38) is arranged to be adjustable relative to the wall (27) and transverse to the axis (16) of rotation.

8. The internal combustion engine according to any one of the claims 1 to 7,
**characterized in**
**that** two wall sections of the fresh gas line (8) or the line section (30) which axially border the flaps (14) with regard to the axis (16) of rotation are in each case formed by a bearing shell (32, 33) which are in each case attached to the fresh gas line (8) or to the housing (29) and have a bearing (34) for a shaft (15) which carries the flap (14) and is arranged coaxially to the axis of rotation (16).

9. The internal combustion engine according to claim 8, **characterized in**
- **that** the bearing shells (32, 33) and the bearings (34) have similar thermal expansion coefficients, and/or
- **that** the flap (14) and the housing (29) have similar thermal expansion coefficients, and/or
- **that** the flap (14) and/or the housing (29) have/has a lower thermal expansion coefficient or, with regard to thermally induced expansions, are/is quasi invariant, and/or
- **that** the flap (14) has a different thermal expansion coefficient than the bearings (34) and/or the bearing shells (32, 33), and/or
- **that** the housing (29) has a different thermal expansion coefficient than the bearings (34) and/or the bearing shells (32, 33), and/or
- **that** for setting the throttling sealing gap (26), at least one of the bearing shells (32, 33) is configured to be adjustable relative to the housing (29), and/or
- **that** for setting the throttling sealing gap (26), at least one of the bearings (34) is configured to be adjustable relative to the bearing shells (32, 33).

10. A continuously operating fresh gas valve (12) for controlling a fresh gas line (8) feeding fresh gas to a cylinder (3) of an internal combustion engine (1), in particular for an internal combustion engine (1) according to any one of the claims 1 to 9, comprising a valve member (14) which is rotationally adjustable about an axis (16) of rotation and which, for implementing switching processes, is permanently adjustable with a constant rotational direction (18) and a rotational speed that depends on the desired switching times so that the valve member (14), in the rotational direction (18), passes successively through a closing angle region (19) in which the respective fresh gas line's (8) cross-section through which a flow can pass decreases, a blocking angle region (20) in which the respective fresh gas line's (8) cross-section through which a flow can pass is at a minimum or blocked, and an opening angle region (21) in which the respective fresh gas line's (8) cross-section through which a flow can pass increases up to the next closing angle region,
**characterized in**
- **that** the valve member is a flap (14),
- **that** between an inner side (23), which faces the flap (14), of a wall section (24) with which the flap (14) interacts for forming the blocking angle region (20) and a flap edge (25) located radially on the outside with respect to the axis (16) of rotation, a throttling sealing gap (26) is formed in the blocking angle region (20),
- **that** the inner side (23), which, together with the flap edge (25), forms the throttling sealing gap (26) in the blocking angle region (20), is formed on a wall component (38) which, with respect to a wall (27) enclosing the flap (14) in the blocking angle region (20), forms a separate component.

## Revendications

1. Moteur à combustion interne, notamment dans un véhicule
- comportant plusieurs cylindres (3), dans lesquels respectivement une chambre de combustion (4) est réalisée et un piston (5) à course réglable est disposé,
- comportant au moins une soupape d'admission (6) par cylindre (3),
- comportant au moins une conduite de gaz frais (8) par cylindre (3) pour alimenter du gaz frais vers la chambre de combustion respective (4),
- comportant au moins une soupape de gaz frais (12) par cylindre (3), qui est disposée dans la conduite de gaz frais (8) respective en amont de la soupape d'admission (6) respective et avec laquelle la conduite de gaz frais respective (8) peut être commandée,
- comportant une unité de commande (13) pour actionner les soupapes de gaz frais (12),
- dans lequel l'unité de commande (13) et les soupapes de gaz frais (12) sont conçues afin de réaliser une charge à froid des cylindres (3), dans lequel la soupape de gaz frais respective (12) bloque la conduite de gaz frais respective (8), avant que la soupape d'admission respective (6) se ferme,
- dans lequel la soupape de gaz frais respective (12) présente un organe de soupape (14) déplaçable en rotation autour d'un axe de rotation (16),
- dans lequel la soupape de gaz frais respective (12) est réalisée comme une soupape fonctionnant en continu, dont l'organe de soupape (14) pour réaliser des processus de commutation peut être déplacé en permanence avec une direction de rotation constante (18) et avec une vitesse de rotation dépendante des temps de commutation souhaités, de sorte que l'organe de soupape (14) dans la direction de rotation (18) passe l'une après l'autre une plage angulaire de fermeture (19), dans laquelle la section transversale pouvant être traversée par un flux de la conduite de gaz frais (8) respective diminue, une plage angulaire de blocage (20), dans laquelle la section transversale pouvant être traversée par un flux de la conduite de gaz frais respective (8) est minimale ou bloquée, et une plage angulaire d'ouverture (21), dans laquelle la section transversale pouvant être traversée par un flux de la conduite de gaz frais respective (8) augmente jusqu'à la plage angulaire de fermeture suivante (19),
**caractérisé en ce que**
- l'organe de soupape est un clapet (14),
- entre un côté intérieur (23) tourné vers le clapet (14) d'une portion de paroi (24), avec laquelle le clapet (14) coopère pour réaliser la plage angulaire de blocage (20), et une arête de clapet (25) située radialement à l'extérieur par rapport à l'axe de rotation (16) dans la plage angulaire de blocage (20), un interstice d'étanchéité à étranglement(26) est réalisé,
- le côté intérieur (23) réalisant l'interstice d'étanchéité à étranglement (26) avec l'arête de clapet (25) dans la plage angulaire de blocage (20) est réalisé sur un composant de paroi (38), qui forme un composant séparé par rapport à une paroi (27) enserrant le clapet (14) dans la plage angulaire de blocage (20).

2. Moteur à combustion interne selon la revendication 1,
**caractérisé en ce que**
la soupape de gaz frais respective (12) peut être commandée de telle sorte que son clapet (14) possède pendant une révolution une vitesse de rotation variable.

3. Moteur à combustion interne selon la revendication 1 ou 2,
**caractérisé en ce que**
le composant de paroi (38) est monté dans la paroi (27).

4. Moteur à combustion interne selon une des revendications 1 à 3,
**caractérisé en ce que**
- la plage angulaire de blocage respective (20) est formée par une cavité (28) de type segment cylindrique, qui est ménagée dans une paroi (27; 38) voisine du clapet (14), et/ou
- la cavité (28) présente du côté de l'entrée et/ou du côté de la sortie une transition arrondie (43) par rapport à la paroi voisine (27 ; 38).

5. Moteur à combustion interne selon une des revendications 1 à 4,
**caractérisé en ce que**
la soupape de gaz frais respective (12) présente un logement (29), qui contient une portion de conduite (30), qui complète dans l'état monté la conduite de gaz frais (8) respective et dans laquelle le clapet (14) est disposé.

6. Moteur à combustion interne selon une des revendications 1 à 5,
**caractérisé en ce que**
la soupape de gaz frais respective (12) présente comme entraînement rotatif (31) du clapet (14) un moteur pas à pas ou un moteur à courant continu sans balais, qui peut présenter un codeur à des fins de réglage de position.

7. Moteur à combustion interne selon une des revendications 1 à 6,
**caractérisé en ce que**
le composant de paroi (38) est disposé de manière déplaçable relativement à la paroi (27) transversalement à l'axe de rotation (16).

8. Moteur à combustion interne selon une des revendications 1 à 7,
**caractérisé en ce que**
deux portions de paroi de la conduite de gaz frais (8) ou de la portion de conduite (30) délimitant axialement le clapet (14) par rapport à l'axe de rotation (16) sont respectivement formées par un coussinet de palier (32, 33), qui sont montés respectivement sur la conduite de gaz frais (8) ou sur le logement (29) et présentent un palier (34) pour un arbre (15) supportant le clapet (14), disposé coaxialement à l'axe de rotation (16).

9. Moteur à combustion interne selon la revendication 8,
**caractérisé en ce que**
- les coussinets de palier (32, 33) et les paliers (34) présentent des coefficients de dilatation thermique similaires, et/ou
- le clapet (14) et le logement (29) présentent des coefficients de dilatation thermique similaires, et/ou
- le clapet (14) et/ou le logement (29) présente/présentent un petit coefficient de dilatation thermique ou est/sont quasi invariants en terme de dilatations induites thermiquement, et/ou
- le clapet (14) présente un autre coefficient de dilatation thermique que les paliers (34) et/ou les coussinets de palier (32, 33), et/ou
- le logement (29) présente un autre coefficient de dilatation thermique que les paliers (34) et/ou que les coussinets de palier (32, 33), et/ou
- au moins un des coussinets de palier (32, 33) est conçu relativement au logement (29) afin de régler de manière ajustable l'interstice d'étanchéité à étranglement (26), et/ou
- au moins un des paliers (34) est conçu relativement au coussinet de palier (32, 33) afin de régler de manière ajustable l'interstice d'étanchéité à étranglement (26).

10. Soupape de gaz frais (12) fonctionnant en continu pour commander un gaz frais d'un cylindre (3) d'une conduite de gaz frais (8) alimentant un moteur à combustion interne (1), notamment pour un moteur à combustion interne (1) selon une des revendications 1 à 9, comportant un organe de soupape (14) déplaçable en rotation autour d'un axe de rotation (16), qui peut être déplacé afin de réaliser des processus de commutation de manière permanente avec une direction de rotation (18) invariable et avec la vitesse de rotation dépendante des temps de commutation souhaités, de sorte que l'organe de soupape (14) dans la direction de rotation (18) passe l'une après l'autre une plage angulaire de fermeture (19), dans laquelle la section transversale pouvant être traversée par un flux de la conduite de gaz frais (8) respective diminue, une plage angulaire de blocage (20), dans laquelle la section transversale pouvant être traversée par un flux de la conduite de gaz frais respective (8) est minimale ou bloquée, et une plage angulaire d'ouverture (21), dans laquelle la section transversale pouvant être traversée par un flux de la conduite de gaz frais respective (8) augmente jusqu'à la plage angulaire de fermeture suivante,
**caractérisé en ce que**
- l'organe de soupape est un clapet (14),
- entre un côté intérieur (23) tourné vers le clapet (14) d'une portion de paroi (24), avec laquelle le clapet (14) coopère pour réaliser la plage angulaire de blocage (20), et une arête de clapet (25) située radialement à l'extérieur par rapport à l'axe de rotation (16) dans la plage angulaire de blocage (20), un interstice d'étanchéité à étranglement (26) est réalisé,
- le côté intérieur (23) réalisant l'interstice d'étanchéité à étranglement (26) avec l'arête de clapet (25) dans la plage angulaire de blocage (20) est réalisé sur un composant de paroi (38), qui forme un composant séparé par rapport à une paroi (27) enserrant le clapet (14) dans la plage angulaire de blocage (20).
